# EUROPEAN PATENT SPECIFICATION

(11) **EP 0 287 527 B1**
(45) Date of publication and mention of the grant of the patent: **04.08.1993**
(21) Application number: 88830152.0
(22) Date of filing: 11.04.1988
(51) Int. Cl.: B01D 35/14

(54) **Multiple lubricating oil filter for internal combustion engines, with a member for monitoring the degree of clogging of the filtration surface**
Mehrfachölfilter für Verbrennungskraftmaschinen mit Anzeige der Verschmutzung der Filteroberfläche
Filtre multiple d'huile lubrifiante pour moteurs à combustion interne avec un dispositif pour contrôler le degré d'encrassement de la surface de filtration

(30) Priority: 13.04.1987 IT 4783987
(43) Date of publication of application: 19.10.1988
(73) Proprietor: ITAL IDEE s.r.l., 00144 Roma (IT)
(72) Inventor: Cantoni, Angelo, I-00144 Roma (IT)
(74) Representative: Cavattoni, Fabio

(56) References cited:
- EP-A- 0 202 201
- DE-A- 3 414 608
- US-A- 3 224 583
- US-A- 3 314 541
- US-A- 4 038 189
- US-A- 4 246 109
- US-A- 4 655 914

## Description

Internal combustion engines are provided with a forced-circulation lubrication circuit which maintains a lubricating oil film between all those mechanical parts undergoing relative movement, in order to reduce their friction and to remove and dissipate the heat generated.

With the passage of time, impurities accumulate in the lubricating oil, these impurities consisting mainly of metal particles deriving from the wear of the engine sliding members, carbon particles produced by the fuel and by the combustion of the seeping oil, and mineral powders, generally siliceous calcareous, deriving from the dust suspended in the engine intake air.

In order to eliminate these solid particles, which with the passage of time lead to considerable wear of the moving parts of the engine, a single filter cartridge is usually present generally in the form of a thin sheet metal casing containing a folded porous paper cylinder, together with a valve system for controlling the passage of oil.

These filters also comprise a pressure relief or bypass valve, to ensure oil feed to the engine even when the oil pressure downstream of the valve is insufficient, due either to operation at high speed or to clogging of the filter.

When this valve opens it on the one hand ensures correct lubrication, even if the filter is clogged, but on the other hand enables not only the oil but also the impurities contained in it to circulate through the engine members, to produce the aforesaid damage.

It is therefore of particular importance to determine the state of clogging of the oil filter in order to be able to replace it as soon as it has exceeded its design operating state and before the pressure relief valve opens or before the oil passing through it undergoes high pressure drop, without having to rely on an estimate of average life as in the case of filters known up to the present time.

The filter element currently used is generally not able to retain solid particles of less than 20 µm in size, because a higher filtration power would lead to an excessive pressure drop in traversing the filtration surface. It is however apparent that a filtration system able to retain solid particles of just a few µm in size would considerably reduce the wear of the engine moving parts.

The methods used up to the present time comprise a second filter element of greater filtration power but traversed by only a certain proportion of the total oil flowing through the lubrication system so that after a certain time all the fluid has passed through the second filter element without creating excessive pressure drop in the circuit.

The main problem with this filtration method derives from the fact that a filtration surface offering considerable flow resistance is in parallel with a path offering negligible resistance.

It is therefore necessary to provide a pressure drop between the upstream and downstream sides of the second filtration surface such as to overcome the flow resistance offered by the filtration surface. This has been achieved up to the present time by dividing the outlet flow from a conventional filter into two paths, one directed to the engine and the other directed to a second filter of greater filtration power and of which the outlet pipe returns to the oil sump so that the pressure drop between the pressurized circuit upstream of the second filter and the oil sump downstream of the second filter overcomes the resistance to flow through its filtration surface.

This method is disadvantageous in that it leads to considerable complication of the lubrication circuit.

There are also double filters having one inlet and two outlets, one directed to the engine and the other to the sump. The filter according to the invention offers the advantages of this type of double-path filter but without requiring modifications to the vehicle engine, this being attained by means of a secondary path formed by a Venturi tube.

US-A-4 246 109 discloses an oil filter apparatus having means for indicating when an excessive pressure develops as a consequence of the clogging of the filter to issue an alarm thereby indicating a need to change the filter.

US-A-4 655 914 discloses a filtering apparatus for removing impurities out of a lubrication oil for use in an internal combustion engine including low and high density filters that operates in parallel along the path followed by the lubrication oil and including a venturi-type arrangement for promoting the flow of oil passing through the high density filter flow that otherwise would be penalized by the easier flow through the low density filter.

According to the present invention, a multiple lubricating oil filter for internal combustion engines with a member for monitoring the degree of clogging of the filtration surface is provided, comprising a casing provided with an end cover having means for connection to the engine lubrication circuit; a first filter pack or element placed inside said casing and positioned so as to be traversed by the engine lubricating oil; a pressure relief valve arranged to prevent said lubricating oil passing through the first filter pack or element in the case of excessive pressure drop, the pressure relief valve cooperating with a piston element associated with an electrically conducting spring to establish electrical contact between a contact member and a metal member being a part of the filter casing, in which a second filter pack or element able to retain solid particles of size less than those retained by the first filter pack or element is positioned downstream of both said first filter element (2) and said pressure relief valve (6) with respect to the flow of lubricating oil, in order to filter at least a part of the oil also when the pressure relief valve is operative as a consequence of the fact that the first filter pack or element is clogged; said second filter pack cooperating actively with a Venturi tube element in the lubricating oil return line to the engine, the arrangement being such that part of said return oil to the engine passes through said second filter pack or element by the effect of the dynamic pressure difference between the Venturi tube inlet mouth and the Venturi tube vacuum region, so that a certain percentage of the return oil to the engine is filtered by the second filter pack or element.

Considering the invention in greater detail, according to the embodiment of the invention the pressure relief valve comprises a cylinder which is urged by a compression spring and in which a piston can slide against friction, one of the faces of this latter being in hydraulic communication with the region upstream of the first filter pack or element and its other in communication with the region downstream of the first filter pack or element with respect to the oil path through the filter, there being provided a pair of separated electrical contacts one of which is connected to the vehicle earth and the other is connected to an electrical conductor leading to the outside of the filter, they being arranged to come into mutual electrical contact, so closing the circuit which connects the conductor to earth, before the pressure relief valve during its travel reaches that point along the cylinder at which the oil is able to bypass the first filter pack or element, this travel being due to the existence of a pressure difference between the valve faces which produces a thrust exceeding the resistance of said spring and the friction resistance along the cylinder in which the piston slides against the forces which oppose its sliding.

An instrument for indicating the closure of the electrical contacts is permanently connected to said electrical conductor, and activates a warning lamp located in a visually suitable position.

Downstream of the first filter pack or element there is provided a second filter pack or element arranged to retain impurities which have a size of just a few µm and which cannot be retained by the first filter pack or element.

The second filter pack or element is traversed by only part of the circulating oil, in order to prevent excessive oil flow resistance occurring in the filtration system, as would happen if all the oil were to pass through the second filter pack or element.

After a certain time of oil circulation through the filtration system all the lubricating oil will have passed through the second filter pack or element, so that only solid particles of size less than 1 µm will remain suspended in the circulating oil.

The second filter pack or element is traversed by part of the oil flowing downstream of the first filter pack or element, and returns it into the same pipe but slightly further downstream. The flow resistance of the second filtration surface is overcome by inducing a pressure drop, where the two parallel circuits join together, by means of a Venturi tube positioned in oil return line to the engine.

The vacuum generated in the central region of the Venturi tube to which the outlet pipe downstream of the second filtration surface is connected makes it possible for the oil to also pass through the second filtration surface in spite of its resistance to the oil flow.

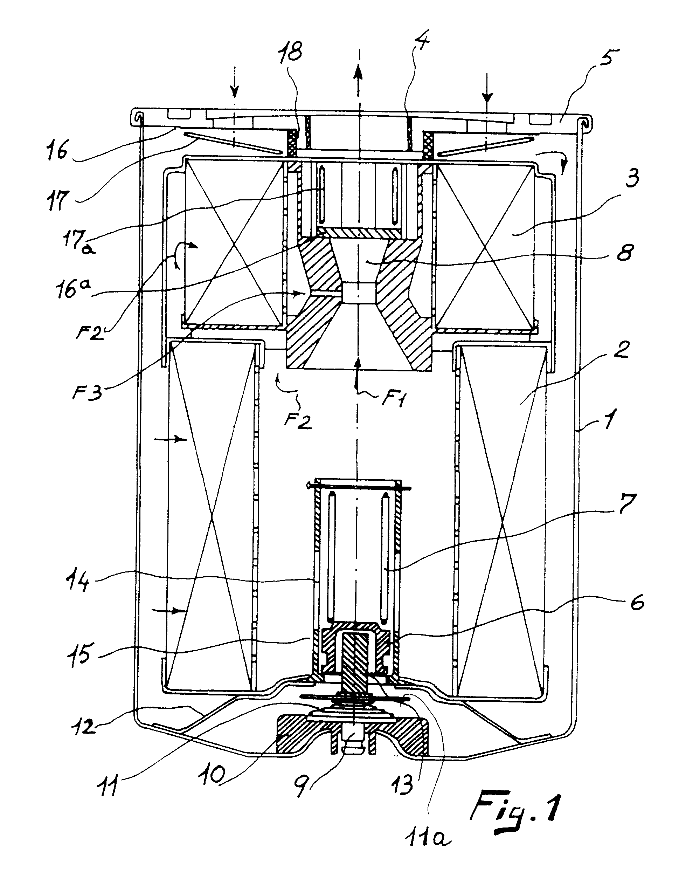

Further details will be apparent from the description given hereinafter with reference to the accompanying drawing, which illustrates one embodiment of the invention and in which Figure 1 is an overall sectional view of a filter according to the invention.

As shown in Figure 1, the filter according to the invention consists of an outer casing 1, usually of metal material, which encloses a paper filter pack 2 and a second filter pack 3, and is connected to the engine lubrication circuit by way of the threaded connector 4 on its end cover 5. The oil path through its interior is diagrammatically shown by the arrows in the figure, and is such as to traverse the first paper filter pack, which is constructed with a large passage surface to minimise the pressure drop of the oil flow through it.

There is also provided a pressure relief valve 6 under the action of a return spring 7. When open, the valve 6 allows the oil to pass freely through the filter by bypassing the filter pack 2, if this latter is clogged, in order to ensure in all cases that sufficient oil passes.

The outer casing 1 is electrically connected to the vehicle earth and on its end there is provided an electrical contact 9 which is isolated from the vehicle earth by means of an insulating block 10 on which there rests a metal spring 11 carrying a contact member 11a which, when the bypass valve 6 is at rest, remains isolated from the metal member 12 in contact, through the casing 1, with the vehicle earth.

When the pressure upstream of the first filter pack 2 exceeds the force exerted by the spring 7 as a consequence of the clogging of the first filter pack 2, this pressure causes the sliding of the insulating-material piston 13 rigid with the valve 6, on which the spring 11 rests, electrical contact is established between the metal member 12 and the contact member 11a. Closure of the electrical contact causes a warning lamp on the vehicle dashboard to light.

The piston 13 is sized such that contact occurs before the bypass valve 6 reaches that point of its travel cylinder 15 at which the oil passage slots 14 are provided.

The flow downstream of the filter pack 2 divides at this point into a main stream (arrow F1) which directly enters the Venturi tube 8 and into a secondary stream (arrow F2) which passes through the second filtration surface 3 and rejoins (arrow F3) the main stream in the vacuum region of the Venturi tube 8.

To prevent the filter emptying when the engine is at rest, which would result in delay in the return of the oil to circulation on restarting, two valves 16, 16a are provided, opposed by the springs 17 and 17a respectively, and opening only when the oil stream respectively entering and leaving the filter exceeds the slight pressure exerted by the springs 17, 17a.

A rubber ring 18 prevents any direct hydraulic connection between the inlet and outlet filter stream.

## Claims

1. A multiple lubricating oil filter for internal combustion engines, with a member for monitoring the degree of clogging of the filtration surface, comprising a casing (1) provided with an end cover (5) having means (4) for connection to the engine lubrication circuit; a first filter pack or element (2) placed inside said casing (1) and positioned so as to be traversed by the engine lubricating oil; a pressure relief valve (6) arranged to prevent said lubricating oil passing through the first filter pack or element (2) in the case of excessive pressure drop, the pressure relief valve (6) cooperating with a piston element (13) associated with an electrically conducting spring (11) to establish electrical contact between a contact member (11a) and a metal member (12) being a part of the filter casing (1), characterised in that a second filter pack or element (3) able to retain solid particles of size less than those retained by the first filter pack or element (2) is positioned downstream of both said first filter element (2) and said pressure relief valve (6) with respect to the flow of lubricating oil, in order to filter at least a part of the oil also when the pressure relief valve (6) is operative as a consequence of the fact that the first filter pack or element (2) is clogged; said second filter pack (3) cooperating actively with a Venturi tube element (8) in the lubricating oil return line to the engine, the arrangement being such that part of said return oil to the engine passes through said second filter pack or element (3) by the effect of the dynamic pressure difference between the Venturi tube inlet mouth and the Venturi tube vacuum region, so that a certain percentage of the return oil to the engine is filtered by the second filter pack or element (3).

2. A multiple filter according to claim 1, characterised by comprising spring (17, 17a) operated non-return valves (16, 16a) located in correspondence with the filter lubricating oil inlet port and with the filter lubricating oil outlet port respectively.

3. A multiple filter according to claim 1, characterised in that, by means of a preset spring (7), the pressure relief valve (6) is normally retained in the closed position, which enables lubricating oil to pass through the first filter pack or element (2).

## Patentansprüche

1. Mehrfach-Schmierölfilter für Verbrennungskraftmaschinen, mit einem Element zum Anzeigen des Verstopfungsgrads der Filteroberfläche, umfassend: ein Gehäuse (1), das eine Endabdeckung (5) aufweist, welche Einrichtungen (4) zum Anschließen an den Schmierkreislauf der Maschine aufweist; ein erstes Filterpack oder -element (2), das innerhalb dieses Gehäuses 1 angeordnet und so positioniert ist, daß es vom Maschinenschmieröl durchsetzt wird; ein Druckablaßventil (6), das dazu angeordnet ist, zu verhindern, daß das Schmieröl durch das erste Filterpack oder -element (2) im Fall eines übermäßigen Druckabfalls hindurchtritt, und das mit einem Kolbenelement (13) zusammenwirkt, welchem eine elektrisch leitende Feder (11) zum Herstellen eines elektrischen Kontakts zwischen einem Kontaktglied (11a) und einem Metallglied (12), das ein Teil des Filtergehäuses (1) ist, zugeordnet ist, dadurch gekennzeichnet, daß ein zweites Filterpack oder -element (3), das Festkörperpartikeln einer Größe unter der Größe der Partikeln, die vom ersten Filterpack oder -element (2) zurückgehalten werden, zurückhalten kann, strömungsunterhalb sowohl vom ersten Filterelement (2) als auch vom Druckablaßventil (6) in Bezug zum Schmierölstrom angeordnet ist, um wenigstens einen Teil des Öls auch dann zu filtern, wenn das Druckablaßventil (6) als Folge der Tatsache operativ ist, das das erste Filterpack oder -element (2) verstopft ist; und daß das zweite Filterpack (3) aktiv mit einem Venturirohrelement (8) in der Schmieröl-Rücklaufleitung zur Maschine zusammenwirkt, wobei die Anordnung so ist, daß ein Teil des zur Maschine zurücklaufenden Öls durch das zweite Filterpack oder -element (3) durch den Effekt der dynamischen Druckdifferenz zwischen der Venturirohr-Einlaßmündung und dem Venturirohr-Vakuumbereich hindurchtritt, so daß ein bestimmter Prozentsatz des zur Maschine zurücklaufenden Öls vom zweiten Filterpack oder -element (3) gefiltert wird.

2. Mehrfach-Filter nach Anspruch 1, dadurch gekennzeichnet, daß es federbetriebene (17,17a) Rückschlagventile (16,16a) umfaßt, die in Übereinstimmung mit der Filter-Schmieröl-Einlaßöffnung bzw. mit der Filter-Schmieröl-Auslaßöffnung angeordnet sind.

3. Mehrfach-Filter nach Anspruch 1, dadurch gekennzeichnet, daß das Druckablaßventil (6) mit Hilfe einer voreingestellten Feder (7) normalerweise in der geschlossenen Stellung gehalten ist, die es dem Schmieröl ermöglicht, durch das erste Filterpack oder -element (2) hindurchzutreten.

## Revendications

1. Filtre multiple à huile de lubrification, pour moteurs à combustion interne, muni d'un organe pour contrôler le degré d'encrassement de la surface de filtrage, comprenant une enveloppe (1) munie d'un couvercle d'extrémité (5) comportant des moyens (4) de raccordement au circuit de lubrification du moteur ; un premier élément ou garnissage filtrant (2) placé à l'intérieur de l'enveloppe (1) et positionné pour être traversé par l'huile de lubrification du moteur ; un clapet de décharge (6) agencé pour empêcher la dite huile de lubrification de circuler à travers le premier élément ou garnissage filtrant (2) en cas de chute de pression excessive, ce clapet de décharge (6) coopérant avec un élément formant piston (13) associé à un ressort électriquement conducteur (11) pour réaliser le contact électrique entre un organe de contact (11a) et un organe métallique (12) faisant partie de l'enveloppe (1) du filtre, caractérisé en ce qu'un second élément ou garnissage filtrant (3), susceptible de retenir les particules solides d'une taille inférieure à celles retenues par le premier élément filtrant (2), est placé en aval à la fois du dit premier élément filtrant (2) et du dit clapet de décharge (6) par rapport à l'écoulement d'huile de lubrification, afin de filtrer au moins une partie de l'huile même quand le clapet de décharge (6) est activé en conséquence de l'encrassement du premier élément ou garnissage filtrant (2) ; le dit second garnissage filtrant (3) coopérant activement avec un élément formant un tube de venturi (8) placé sur le trajet de retour de l'huile de lubrification vers le moteur, l'agencement étant tel qu'une partie de la dite huile de retour au moteur passe au travers du dit second élément ou garnissage filtrant sous l'effet de la différence de pression dynamique entre l'embouchure d'entrée du tube de venturi et la région en dépression du tube de venturi, de sorte qu'un certain pourcentage de l'huile de retour au moteur est filtrée par le second élément ou garnissage filtrant (3).

2. Filtre multiple selon la revendication 1, caractérisé en ce qu'il comprend des clapets anti-retour (16, 16a) actionnés par ressort (17, 17a), placés en communication respectivement avec l'orifice d'entrée de l'huile de lubrification dans le filtre et avec l'orifice par lequel l'huile de lubrification sort du filtre.

3. Filtre multiple selon la revendication 1, caractérisé en ce que par le moyen d'un ressort taré au préalable (7), le clapet de décharge (6) est normalement maintenu dans la position fermée, permettant à l'huile de lubrification de passer à travers le premier élément ou garnissage filtrant (2).
